# EUROPÄISCHE PATENTSCHRIFT

(11) **EP 2 422 244 B1**
(45) Veröffentlichungstag und Bekanntmachung des Hinweises auf die Patenterteilung: **27.11.2013**
(21) Anmeldenummer: 10718871.6
(22) Anmeldetag: 20.04.2010
(51) Int. Cl.: G05B 9/03, G05B 19/05

(54) **SICHERHEITSSTEUERUNG UND VERFAHREN ZUM STEUERN EINER AUTOMATISIERTEN ANLAGE**
SAFETY-RELATED CONTROL UNIT, AND METHOD FOR CONTROLLING AN AUTOMATED SYSTEM
COMMANDE DE SÉCURITÉ ET PROCÉDÉ DE COMMANDE D'UNE INSTALLATION AUTOMATISÉE

(30) Priorität: 20.04.2009 DE 102009019087
(43) Veröffentlichungstag der Anmeldung: 29.02.2012
(73) Patentinhaber: Pilz GmbH & Co. KG, 73760 Ostfildern (DE)
(72) Erfinder: MOOSMANN, Peter, 73760 Ostfildern (DE)
(74) Vertreter: Witte, Weller & Partner
(86) Internationale Anmeldenummer: PCT/EP2010/002436
(87) Internationale Veröffentlichungsnummer: WO 2010/121796

(56) Entgegenhaltungen:
- DE-A1- 19 802 728
- DE-U1-202006 016 012

## Beschreibung

Die vorliegende Erfindung betrifft eine Sicherheitssteuerung zum Steuern einer automatisierten Anlage gemäß einem in der Sicherheitssteuerung ablaufenden Anwenderprogramm, wobei die Anlage eine Vielzahl von Sensoren und eine Vielzahl von Aktuatoren umfasst, und wobei das Anwenderprogramm eine Vielzahl von Steueranweisungen zum Steuern der Aktuatoren umfasst, mit einem ersten Prozessor, der dazu ausgebildet ist, durch Verarbeiten einer Vielzahl von ersten Programmvariablen zumindest einen Teil der Steueranweisungen abzuarbeiten, mit einem zweiten Prozessor, der dazu ausgebildet ist, durch Verarbeiten einer Vielzahl von zweiten Programmvariablen zumindest einen Teil der Steueranweisungen abzuarbeiten, und mit einem nicht-flüchtigen Datenspeicher zum Speichern von nullspannungssicheren Daten, die beim Einschalten der Sicherheitssteuerung nach einem Spannungsausfall vorhanden sein müssen.

Die Erfindung betrifft des weiteren ein Verfahren zum Steuern einer automatisierten Anlage, wobei die Anlage eine Vielzahl von Sensoren und eine Vielzahl von Aktuatoren umfasst.

Eine Sicherheitssteuerung im Sinne der vorliegenden Erfindung ist ein Gerät, oder eine Vorrichtung, das bzw. die von Sensoren gelieferte Eingangssignale aufnimmt und daraus durch logische Verknüpfungen und eventuell weitere Signal- oder Datenverarbeitungsschritte Ausgangssignale erzeugt. Die Ausgangssignale können dann Aktuatoren zugeführt werden, die in Abhängigkeit von den Eingangssignalen Aktionen oder Reaktionen in einer gesteuerten Anlage bewirken.

Ein bevorzugtes Anwendungsgebiet für derartige Sicherheitssteuerungen ist die Überwachung von Not-Aus-Tastem, Zwei-Hand-Steuerungen, Schutztüren oder Lichtgittern im Bereich der Maschinensicherheit. Derartige Sensoren werden verwendet, um beispielsweise eine Maschine, von der im Betrieb eine Gefahr für Menschen oder materielle Güter ausgeht, abzusichern. Beim Öffnen der Schutztür oder beim Betätigen des Not-Aus-Tasters wird jeweils ein Signal erzeugt, das der Sicherheitssteuerung als Eingangssignal zugeführt ist In Reaktion darauf schaltet die Sicherheitssteuerung dann beispielsweise mit Hilfe eines Aktuators den gefahrbringenden Teil der Maschine ab.

Charakteristisch an einer Sicherheitssteuerung ist im Gegensatz zu einer "normalen" Steuerung, dass die Sicherheitssteuerung selbst dann, wenn bei ihr oder einem mit ihr verbundenen Gerät eine Fehlfunktion auftritt, stets einen sicheren Zustand der gefahrbringenden Anlagen oder Maschinen gewährleistet. Daher werden bei Sicherheitssteuerungen extrem hohe Anforderungen an die eigene Fehlersicherheit gestellt, was einen erheblichen Aufwand bei der Entwicklung und Herstellung zur Folge hat.

In der Regel benötigen Sicherheitssteuerungen vor ihrer Verwendung eine besondere Zulassung durch zuständige Aufsichtsbehörden, wie beispielsweise in Deutschland durch die Berufsgenossenschaften oder den TÜV. Die Sicherheitssteuerung muss dabei vorgegebene Sicherheitsstandards einhalten, die beispielsweise in der europäischen Norm EN 954-1 oder einer vergleichbaren Norm, beispielsweise der Norm IEC 61508 oder der Norm EN ISO 13849-1, niedergelegt sind. Im Folgenden wird daher unter einer Sicherheitssteuerung ein Gerät bzw. eine Vorrichtung verstanden, die zumindest die Sicherheitskategorie 3 der genannten europäischen Norm EN 954-1 erfüllt oder deren Safety Integrity Level (SIL) zumindest die Stufe 2 gemäß der genannten Norm IEC 61508 erreicht.

Eine programmierbare Sicherheitssteuerung bietet dem Anwender die Möglichkeit, die logischen Verknüpfungen und gegebenenfalls weitere Signal- oder Datenverarbeitungsschritte mit Hilfe einer Software, dem so genannten Anwenderprogramm, seinen Bedürfnissen entsprechend individuell festzulegen. Daraus resultiert eine große Flexibilität im Vergleich zu früheren Lösungen, bei denen die logischen Verknüpfungen durch eine definierte Verdrahtung zwischen verschiedenen Sicherheitsbausteinen erzeugt wurden. Ein Anwenderprogramm kann beispielsweise mit Hilfe eines handelsüblichen Personalcomputers (PC) und unter Verwendung entsprechend eingerichteter Softwareprogramme erstellt werden.

Wie bereits erwähnt, werden bei einer Sicherheitssteuerung extrem hohe Anforderungen an die eigene Fehlersicherheit, d.h. mit Blick auf in der Sicherheitssteuerung auftretende Fehler gestellt. Eine Maßnahme besteht beispielsweise darin, eine Sicherheitssteuerung zumindest in den Daten verarbeitenden Komponenten, wie beispielsweise den Prozessoren, redundant auszulegen. Somit wird eine größtmögliche Verfügbarkeit der Sicherheitssteuerung mit Blick auf in der Sicherheitssteuerung auftretende Fehler erzielt. Ebenso ist eine hohe Verfügbarkeit einer Sicherheitssteuerung mit Blick auf außerhalb der Sicherheitssteuerung möglicherweise auftretende Fehler wünschenswert. So sollte eine Sicherheitssteuerung beispielsweise nach einem Spannungsausfall wieder problemlos in demjenigen Zustand weiter betrieben werden, den die Sicherheitssteuerung vor dem Spannungsausfall einnahm. Aber gerade hinsichtlich der Verfügbarkeit bei außerhalb der Sicherheitssteuerung auftretenden Fehlern sind Sicherheitssteuerungen noch nicht optimal.

DE 198 02 728 Aloffenbart eine Sicherheitssteuerung mit einem nicht-flüchtigen Datenspeicher, in dem Maschinenparameter MP abgespeichert werden. Die Maschinenparameter sollen im Wesentlichen über die gesamte Lebensdauer der Maschine oder der Steuerung unverändert bleiben. Um die Maschinenparameter auf Veränderungen hin zu überwachen, werden in redundanten Kanälen der Sicherheitssteuerung unabhängige CRC-Prüfsummen berechnet und zusammen mit den Maschinenparametern in dem nicht-flüchtigen Datenspeicher abgespeichert. Im regulären Betrieb werden die CRC-Prüfsummen in bestimmten Zeitabständen zyklisch überprüft, wobei ein erster Prozessor die erste Prüfsumme und ein zweiter Prozessor die zweite Prüfsumme berechnet.

DE 20 2006 016 012 U1 offenbart eine Systemarchitektur für eine Firmware, die in einem sicherheitsgerichteten Gerät zur Anwendung kommt. Die Firmware besitzt einen ersten Teil, welcher für eine sicherheitstechnische Auswertung zuständig ist, und einen nicht-sicheren, applikationsspezifischen Teil. Um eine Änderung des nicht-sicheren, applikationsspezifischen Teils zu ermöglichen, ohne den sicheren Teil zu kompromittieren, sind der sichere Teil und der applikationsspezifische Teil in unterschiedlichen Speichern getrennt voneinander abgespeichert und jeweils mit einer eigenen CRC-Prüfsumme gesichert. Außerdem werden sicherheitsrelevante Eingangsdaten und sicherheitsrelevante Ausgangsdaten mit einer weiteren CRC-Prüfsumme gesichert. Mit Hilfe der CRC-Prüfsummen soll sichergestellt werden, dass bei einer Änderung oder Ausführung des applikationsspezifischen Teils keine Veränderung des sicheren Teils und keine Veränderung der sicheren Ein- und Ausgangsdaten erfolgt.

Es ist daher eine Aufgabe der vorliegenden Erfindung eine Sicherheitssteuerung und ein Verfahren der eingangs genannten Art weiterzubilden, um die Verfügbarkeit von der Sicherheitsteuerung bezüglich außerhalb der Sicherheitssteuerung auftretender Fehler zu erhöhen und gleichzeitig die Kosten für eine Sicherheitssteuerung zu reduzieren.

Diese Aufgabe wird durch eine Sicherheitssteuerung der eingangs genannten Art gelöst, wobei der erste Prozessor dazu ausgebildet ist, für zumindest eine der ersten Programmvariablen einen ersten Prüfwert in Abhängigkeit eines für diese erste Programmvariable zu einem ersten definierten Zeitpunkt vorliegenden Momentanwertes zu ermitteln, wobei der zweite Prozessor weiter dazu ausgebildet ist, einen mit dem ersten Prüfwert korrespondierenden zweiten Prüfwert zu ermitteln, und wobei der Datenspeicher dazu ausgebildet ist, den Momentanwert, den ersten Prüfwert und den zweiten Prüfwert abzuspeichern, wobei die Sicherheitssteuerung dazu ausgebildet ist, bei deren Neustart eine Gültigkeitsprüfung des Momentanwertes durchzuführen, wobei die Sicherheitssteuerung weiter dazu ausgebildet ist, mittels des ersten Prozessors den Momentanwert mit dem ersten Prüfwert zu plausibilisieren und mittels des zweiten Prozessors den Momentanwert mit dem zweiten Prüfwert zu plausibilisieren.

Die Aufgabe wird ferner durch ein Verfahren der eingangs genannten Art gelöst, bei dem folgende Schritte ausgeführt werden:
- Verarbeiten einer Vielzahl von ersten Programmvariablen, mit dem ersten Prozessor,
- Ermitteln eines Prüfwerts für zumindest eine der ersten Programmvariablen in Abhängigkeit eines für diese erste Programmvariable zu einem ersten definierten Zeitpunkt vorliegenden Momentanwertes mit Hilfe des ersten Prozessors,
- Verarbeiten einer Vielzahl von zweiten Programmvariablen mit dem zweiten Prozessor,
- Ermitteln eines mit dem ersten Prüfwert korrespondierenden zweiten Prüfwerts mit dem zweiten Prozessor,
- Abspeichern des Momentanwerts, des ersten Prüfwerts und des zweiten Prüfwerts in einem nicht-flüchtigen Datenspeicher, und
- Durchführen einer Gültigkeitsprüfung des Momentanwerts bei einem Neustart der Sicherheitssteuerung, wobei die Sicherheitssteuerung mittels des ersten Prozessors den Momentanwert mit dem ersten Prüfwert plausibilisiert und mittels des zweiten Prozessors den Momentanwert mit dem zweiten Prüfwert plausibilisiert.

Der neuen Sicherheitssteuerung und dem neuen Verfahren liegt die Idee zugrunde, in einem Datenspeicher für eine Programmvariable einen Momentanwert und sowohl einen ersten Prüfwert, der mit einem ersten Prozessor und somit für einen ersten Kanal der Sicherheitssteuerung ermittelt wird, und einen zweiten Prüfwert, der mit einem zweiten Prozessor und somit für einen zweiten Kanal ermittelt wird, zu speichern. Somit kann bei einem Neustart, beispielsweise nach einer unerwarteten Unterbrechung des Betriebsablaufs, für beide Kanäle die Gültigkeit des noch gespeicherten Momentanwerts redundant überprüft werden. Dies erhöht die Verfügbarkeit der Sicherheitssteuerung. Da beide Prüfwerte in einem Datenspeicher gespeichert werden, reicht es aus, für lediglich einen der beiden Kanäle einen Datenspeicher vorzusehen. Es ist nicht erforderlich, für jeden der beiden Kanäle einen eigenen Datenspeicher vorzusehen. Dies reduziert die Kosten für die Realisierung einer Sicherheitsteuerung.

Die Sicherheitssteuerung ist dazu ausgebildet, beim Neustart eine Gültigkeitsüberprüfung des Momentanwertes durchzuführen und mittels des ersten Prozessors den Momentanwert mit dem ersten Prüfwert zu plausibiliseren und mittels des zweiten Prozessors den Momentanwert mit dem zweiten Prüfwert zu plausibilisieren.

Diese Maßnahme hat den Vorteil, dass mit nur einem Momentanwert, der zudem für nur einen der beiden Kanäle ermittelt wird, für die beiden Kanäle einer Sicherheitssteuerung eine Gültigkeitsprüfung vorgenommen werden kann. Dadurch lässt sich beispielsweise der Aufwand für das Speichern des Momentanwerts reduzieren. So reicht es aus, lediglich einen einzigen Datenspeicher bereitzustellen. Vorzugsweise ist dieser Datenspeicher demjenigen Kanal der Sicherheitssteuerung zugeordnet, in dem sowohl sicherheitsrelevante Programmvariablen als auch nicht-sicherheitsrelevante Programmvariablen verarbeitet werden.

Die oben genannte Aufgabe ist daher vollständig gelöst.

In einer Ausgestaltung der Erfindung ist der zweite Prozessor weiter dazu ausgebildet, den zweiten Prüfwert in Abhängigkeit eines Momentanwertes einer der zweiten Programmvariablen zu ermitteln, wobei die zweite Programmvariable mit der ersten Programmvariable korrespondiert.

In einigen Varianten dieser Ausgestaltung ist sind die erste und zweite Programmvariable zueinander redundante Programmvariablen, die einen gemeinsamen Momentanwert der gesteuerten Anlage repräsentieren. Diese Maßnahme besitzt mehrere Vorteile. Zum einen werden die beiden Prüfwerte eigenständig und somit unabhängig voneinander ermittelt. Dadurch wird die Überprüfung, ob der gespeicherte Momentanwert gültig ist oder nicht, zuverlässiger. Zudem steht für jeden der beiden Kanäle ein eigener Prüfwert zur Verfügung. Für beide Kanäle kann somit eine eigenständige Gültigkeitsprüfung und Plausibilisierung des gespeicherten Momentanwerts vorgenommen werden. Diese Redundanz erhöht die Verfügbarkeit der Sicherheitssteuerung und somit der zu steuernden Anlage.

In einer weiteren Ausgestaltung der zuvor genannten Maßnahme liegen der Momentanwert der ersten Programmvariabeln und der Momentanwert der zweiten Programmvariablen in demselben Taskzyklus vor.

In der Regel arbeiten die Prozessoren ihr jeweiliges Steuerprogramm zyklisch ab, wobei jeder Prozessor seine Programmvariablen zyklisch wiederholt einliest. In dieser Ausgestaltung stammen die erste und zweite Programmvariable aus einem gemeinsamen Zyklus. Sie repräsentieren daher zwei weitgehend zeitgleich vorliegende Momentanwerte. Durch diese Maßnahme wird sichergestellt, dass sich die beiden Momentanwerte zeitlich einander entsprechen. Sie sind daher besser vergleichbar und es reicht aus, für eine Gültigkeitsprüfung lediglich einen Momentanwert abzuspeichern. Dies ermöglicht eine kostengünstige Dimensionierung des Datenspeichers. Der Taskzyklus ist vorteilhaft durch den ersten definierten Zeitpunkt definiert.

In einer weiteren Ausgestaltung ist die Sicherheitssteuerung dazu ausgebildet, die beiden Prüfwerte diversitär zu ermitteln.

Diese Maßnahme trägt dazu bei, die Zuverlässigkeit einer Gültigkeitsprüfung zu erhöhen. Vorzugsweise werden für die beiden Kanäle einer Sicherheitssteuerung unterschiedliche Algorithmen für das Ermitteln des jeweiligen Prüfwerts verwendet.

In einer weiteren Ausgestaltung ist der Datenspeicher als nicht-flüchtiger Datenspeicher ausgebildet.

Diese Maßnahme stellt sicher, dass der gespeicherte Momentanwert und die beiden gespeicherten Prüfwerte bei einem Neustart der Sicherheitssteuerung, insbesondere nach einer unerwarteten Unterbrechung, sofort verfügbar sind. Die Anlage kann schneller wieder in Betrieb genommen werden. Vorzugsweise ist der Datenspeicher als sogenannter Magneto-resistive Random Access Memory (MRAM) oder als Ferroelectric Random Access Memory (FRAM) ausgebildet.

In einer weiteren Ausgestaltung ist die Sicherheitssteuerung dazu ausgebildet, die beiden Prüfwerte wiederholt für aufeinanderfolgende Zeitpunkte zu ermitteln.

Diese Maßnahme stellt sicher, dass die gespeicherten Momentanwert wiederholt aktualisiert werden. Vorzugsweise erfolgt die Aktualisierung in regelmäßigen Zeitintervallen. Die Ausgestaltung trägt vorteilhaft dazu bei, dass ein Neustart der Anlage jeweils mit recht aktuellen Werten erfolgen kann. Ein Neustart der Anlage kann daher einfacher und schneller erfolgen.

In einer weiteren Ausgestaltung der Erfindung ist der erste Prozessor weiter dazu ausgebildet, einen Momentanwertvergleich durchzuführen.

In dieser Ausgestaltung vergleicht der erste Prozessor Momentanwerte von unterschiedlichen Zeitpunkten. Diese Maßnahme ermöglicht ein optimiertes Speichern des jeweils aktuellen Momentanwerts und der beiden Prüfwerte. Der Momentanwertvergleich wird durchgeführt, um festzustellen, ob eine Änderung des Momentanwertes gegenüber einem vorhergehenden, bereits gespeicherten Momentwert vorliegt. Wird festgestellt, dass keine Änderung vorliegt, werden der aktuelle Momentanwert und die beiden aktuellen Prüfwerte nicht noch einmal zusätzlich abgespeichert. Mit anderen Worten erfolgt ein Speichern vorteilhafterweise nur dann, wenn tatsächlich eine Änderung vorliegt. Dadurch kann ein kleinerer Datenspeicher eingesetzt werden, was zu einer Kostenersparnis führt. Hinsichtlich der Arbeitsweise der Sicherheitssteuerung bewirkt diese Maßnahme eine Aufwandsoptimierung. Diese Maßnahme führt nämlich dazu, dass nicht für jeden Taskzyklus ein Momentanwert und zugehörige Prüfwerte gespeichert werden.

In einer weiteren Ausgestaltung weist der Datenspeicher zwei der ersten Programmvariable zugeordnete Speicherbereiche auf.

Diese Maßnahme ermöglicht es, einen aktuellen Momentanwert und die beiden jeweils zugehörigen Prüfwerte für zwei unterschiedliche Zeitpunkte und somit zwei unterschiedliche Taskzyklen, abzuspeichern. Bevorzugt wird also eine Historie des Momentanwertes über zumindest zwei verschiedene Taskzyklen in den Speicherbereichen gespeichert. Dadurch wird die Verfügbarkeit der zu steuernden Anlage bei einem Neustart weiter erhöht. Wird bei der Gültigkeitsprüfung festgestellt, dass der zuletzt gespeicherte, aktuelleste Momentanwert nicht gültig ist und somit für die Initialisierung der Sicherheitssteuerung nicht verwendet werden kann, steht immer noch ein zuvor gespeicherter, älterer Momentanwert zur Verfügung, der vorteilhaft für den Neustart verwendet werden kann.

In einer weiteren Ausgestaltung ist die Sicherheitssteuerung dazu ausgebildet, den Momentanwert und die beiden Prüfwerte abwechselnd in die beiden Speicherbereiche zu speichern.

Diese Ausgestaltung verwendet zwei Speicherbereiche, um die Historie des Momentanwertes wechselweise zu aktualisieren. Die Ausgestaltung hält zu jedem Zeitpunkt einen aktuellsten Momentanwert (aus dem aktuellen Taskzyklus Z) in dem einen Speicherbereich und einen älteren Momentanwert (aus dem vorhergehenden Taskzyklus Z-1) in dem anderen Speicherbereich bereit. Wenn nun im nächstfolgenden Taskzyklus Z+1 ein aktueller Momentanwert eingelesen wird, überschreibt diese Ausgestaltung den jeweils ältesten gespeicherten Momentanwert. Diese Ausgestaltung stellt sicher, dass im Betrieb der Sicherheitssteuerung stets die beiden jüngsten Generationen der Momentanwerte mit einem Minimum an Speicherbedarf gespeichert sind und somit für eine Initialisierung der Sicherheitssteuerung nach einer Unterbrechung zur Verfügung stehen.

In einer weiteren Ausgestaltung ist zumindest einer der beiden Prozessoren dazu ausgebildet, einen Wert für einen Schreibzähler zu ermitteln.

Vorteilhaft repräsentiert der Schreibzähler, welcher der beiden zuvor genannten Speicherbereiche den jeweils jüngsten Momentanwert enthält. Mit dieser Ausgestaltung kann man für den Fall, dass in dem Datenspeicher mehrere zu unterschiedlichen Zeitpunkte vorliegende Momentanwerte gespeichert sind, leichter feststellen, welcher dieser Momentanwerte der jüngste ist und somit als erstes einer Gültigkeitsprüfung zu unterziehen ist. Vorzugsweise ermittelt jeder der beiden Prozessoren einen eigenen Schreibzähler. Dadurch wird die Verfügbarkeit der Sicherheitsteuerung weiter erhöht.

In einer weiteren Ausgestaltung ist der erste Prozessor weiter dazu ausgebildet, den ersten Prüfwert in Abhängigkeit des Momentanwertes und des Wertes des Schreibzählers zu ermitteln.

In dieser Ausgestaltung berücksichtigt der erste Prozessor nicht nur den Momentanwert, sondern auch den Schreibzählerwert bei der Ermittlung der Prüfsumme. Vorzugsweise wird der erste Prüfwert wie folgt ermittelt: der Momentanwert und der Wert des Schreibzählers sind in zwei Speicherzellen eines Speicherbereichs gespeichert. Der erste Prüfwert wird dann über die Werte in den beiden Speicherzellen ermittelt. Die Ausgestaltung besitzt den Vorteil, dass der Prüfwert sowohl den Momentanwert als auch dessen Aktualität absichert, was die Zuverlässigkeit der Information bei einem Neustart der Anlage weiter erhöht.

In einer weiteren Ausgestaltung handelt es sich bei den ersten und bei den zweiten Programmvariablen jeweils um sicherheitsrelevante Programmvariablen.

Diese Maßnahme gewährleistet, dass bei einem Neustart und einer damit verbundenen Initialisierung die Werte derjenigen Programmvariabeln verfügbar sind, die in der Sicherheitssteuerung zur Bearbeitung der Sicherheitssteueranweisungen benötigt werden. Damit ist die Betriebssicherheit der Anlage vom Neustart an gewährleistet. Es können aber auch Momentanwerte von nicht-sicherheitsrelevanten Programmvariablen in dem Datenspeicher gespeichert werden.

Die Daten, die bei einem Neustart der Sicherheitssteuerung zur Verfügung stehen müssen und somit in dem Datenspeicher zu speichern sind, werden allgemein als nullspannungssichere Daten bezeichnet. Wie bereits ausgeführt, sind nullspannungssichere Daten im wesentlichen sicherheitsrelevante Daten. Hierbei kann es sich um Momentanwerte von sicherheitsrelevanten Programmeingangsvariablen, um Momentanwert von sicherheitsrelevanten Programmausgangsvariablen oder um Momentanwerte von sicherheitsrelevanten Programmzwischenvariablen handeln. Kurzum, es kann sich um Daten handeln, die beim Abarbeiten von sicherheitsrelevanten Steueranweisungen anfallen. Es kann sich aber auch um nicht-sicherheitsrelevante Daten handeln, die beim Abarbeiten von nicht-sicherheitsrelevanten Steueranweisungen anfallen, also um Momentanwerte von nicht-sicherheitsrelevanten Programmeingangsvariablen, um Momentanwert von nicht-sicherheitsrelevanten Programmausgangsvariablen oder um Momentanwerte von nicht-sicherheitsrelevanten Programmzwischenvariablen. Auch nicht-sicherheitsrelevante Daten können für ein Hochfahren einer Anlage von Bedeutung sein. Als Beispiel sei eine nicht-sicherheitsrelevante Zählervariable genannt, deren Momentanwert die Anzahl derjenigen Sessel einer Sesselbahn repräsentiert, die sich nicht mehr auf dem Transportseil, sondern bereits in einem Lagerdepot befinden. Vorzugsweise kann der erste Prozessor dazu ausgebildet sein, für eine beliebige Anzahl von ersten Programmvariablen jeweils einen ersten Prüfwert zu ermitteln. In entsprechender Weise kann der zweite Prozessor dazu ausgebildet sein, für jeden der ersten Prüfwerte einen korrespondierenden zweiten Prüfwert zu ermitteln.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer zu steuernden Anlage;
- Fig. 2: eine schematische Darstellung eines Datenspeichers zur Erläuterung des Abspeicherns von Daten gemäß einer ersten Ausführungsform;
- Fig. 3: eine schematische Darstellung eines Datenspeichers zur Erläuterung des Abspeicherns von Daten gemäß einer zweiten Ausführungsform.

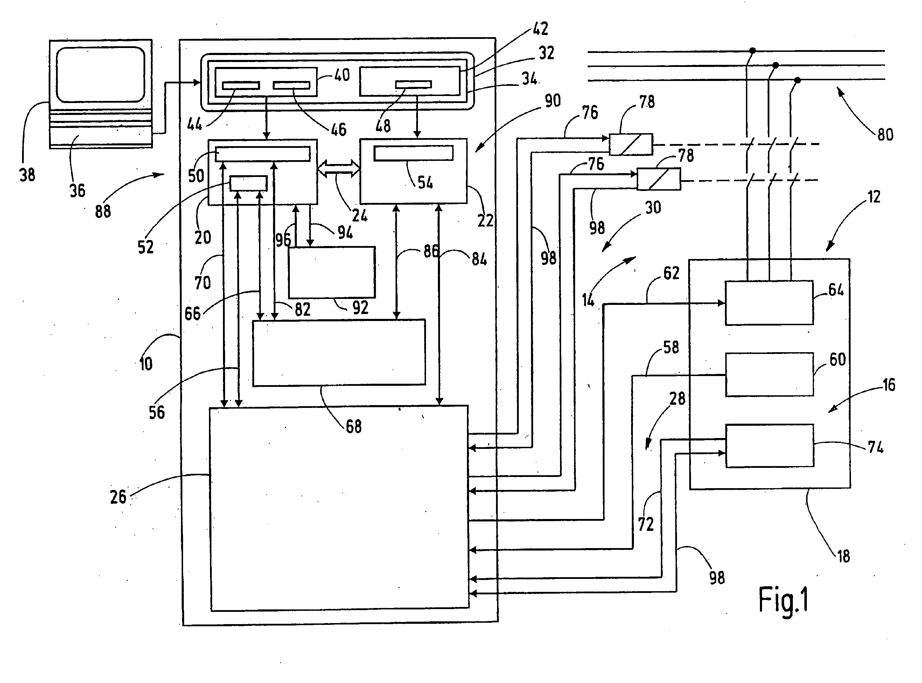

In Fig. 1 ist eine Sicherheitssteuerung mit der Bezugsziffer 10 bezeichnet. Die Sicherheitssteuerung 10 ist dazu ausgebildet, eine in ihrer Gesamtheit mit der Bezugsziffer 12 bezeichnete automatisierte Anlage zu steuern. Die Anlage 12 umfasst eine Vielzahl von Aktuatoren 14 und eine Vielzahl von Sensoren 16. Exemplarisch ist ein in der Anlage 12 enthaltener Verbraucher 18 dargestellt, bei dem es sich beispielsweise um einen Roboter handeln kann

Die Sicherheitssteuerung 10 ist zweikanalig-redundant aufgebaut, um die erforderliche Fehlersicherheit zum Steuern sicherheitskritischer Anwendungen bzw. Prozesse zu erreichen. Stellvertretend für den zweikanaligen Aufbau sind in Fig. 1 zwei voneinander getrennte Prozessoren, nämlich ein erster Prozessor 20 und ein zweiter Prozessor 22, dargestellt. Die beiden Prozessoren 20, 22 stehen über eine bidirektionale Kommunikationsschnittstelle 24 miteinander in Verbindung, um sich gegenseitig zu überwachen und Daten austauschen zu können. Bevorzugt sind die beiden Kanäle der Sicherheitssteuerung 10 und die beiden Prozessoren 20, 22 diversitär, d.h. verschieden voneinander, aufgebaut, um systematische Fehler weitgehend auszuschließen.

Mit der Bezugsziffer 26 ist eine Ein-/Ausgabeeinheit bezeichnet, die mit jedem der beiden Prozessoren 20, 22 in Verbindung steht. Die Ein-/Ausgabeeinheit 26 nimmt Steuerungseingangssignale 28 von den Sensoren 16 auf und leitet diese in einem angepassten Datenformat an jeden der beiden Prozessoren 20, 22 weiter. Ferner erzeugt die Ein-/Ausgabeeinheit 26 in Abhängigkeit von den Prozessoren 20, 22 Steuerungsausgangssignale 30 mit denen die Aktuatoren 14 angesteuert werden.

Mit der Bezugsziffer 32 ist ein Programmspeicher bezeichnet, in dem ein Anwenderprogramm 34 in Form von Maschinencode abgespeichert ist. Das Anwenderprogramm 34 wird von der Sicherheitssteuerung 10 abgearbeitet. Das Anwenderprogramm 34 wird insgesamt mit Hilfe eines Programmiertools erstellt, wobei zunächst ein Quellcode erstellt wird, der dann in einen Maschinencode umgesetzt wird. Bei dem Programmiertool handelt es sich beispielsweise um ein Computerprogramm 36, welches auf einem herkömmlichen PC 38 ausgeführt werden kann. Vorzugsweise ist der Programmspeicher 32 als SD-Card oder als CF-Card ausgeführt. Dies ermöglicht einen einfachen Austausch des Anwenderprogramms 34 auch ohne direkten Anschluss an den PC 38. Alternativ hierzu kann das Anwenderprogramm 34 auch in einem fest in der Sicherheitssteuerung 10 eingebauten Speicher, beispielsweise einem EEPROM, abgespeichert sein. In jedem Fall ist der Programmspeicher 32 nullspannungssicher ausgeführt.

Für ein fehlersicheres Verarbeiten von sicherheitsrelevanten Programmvariablen sind im Programmspeicher 32 ein erster Maschinencode 40 und ein zweiter Maschinencode 42 abgespeichert. Der erste Maschinencode 40 ist für den ersten Prozessor 20 und der zweite Maschinencode 42 ist für den zweiten Prozessor 22 bestimmt. Der erste Maschinencode 40 umfasst einen ersten Sicherheitscode 44 und einen Standardcode 46. Der erste Sicherheitscode 44 umfasst diejenigen Sicherheitssteueranweisungen, die vom ersten Prozessor 20 im Rahmen der von der Sicherheitssteuerung 10 zu erledigenden Sicherheitsaufgaben abzuarbeiten sind. Der Standardcode 46 umfasst diejenigen Standardsteueranweisungen, die vom ersten Prozessor 20 im Rahmen der von der Sicherheitssteuerung 10 zu erledigenden Standardaufgaben abzuarbeiten sind. Der zweite Maschinencode 42 umfasst einen zweiten Sicherheitscode 48, der diejenigen Sicherheitssteueranweisungen umfasst, die vom zweiten Prozessor 22 abzuarbeiten sind. Die Sicherheitssteueranweisungen und Standardsteueranweisungen werden hier zusammenfassend als Steueranweisungen bezeichnet.

In Abhängigkeit des Bearbeitungsfortganges wird in dem ersten Prozessor 20 zum einen eine erste aktuelle Sicherheitssteueranweisung 50 und zum anderen eine aktuelle Standardsteueranweisung 52 abgearbeitet. Im Wesentlichen zeitgleich wird in dem zweiten Prozessor 22 eine zweite aktuelle Sicherheitssteueranweisung 54 abgearbeitet.

Im Rahmen der Bearbeitung der aktuellen Standardsteueranweisung 52, bei der es sich um eine nicht-sicherheitsrelevante Steueranweisung handelt, werden erste nicht-sicherheitsrelevante Daten 56 zwischen dem ersten Prozessor 20 und der Ein-/Ausgabeeinheit 26 ausgetauscht. Hierbei werden dem ersten Prozessor 20 unter Verwendung von nicht-sicherheitsrelevanten Programmeingangsvariablen Momentanwerte von nicht-sicherheitsrelevanten Steuerungseingangssignalen 58 zugeführt, die von nicht-sicherheitsrelevanten Sensoren 60 erzeugt werden. Bei den nicht-sicherheitsrelevanten Sensoren 60 handelt es sich um Sensoren, deren Signale in erster Linie für den Betriebsablauf der Anlage von Bedeutung sind, von denen jedoch bei einem Fehler keine unmittelbare Gefährdung von Leib und Leben ausgeht. Beispielsweise erfassen nicht-sicherheitsrelevante Sensoren die Position eines Werkzeugs zur Bearbeitung eines Werkstücks. Die nicht-sicherheitsrelevanten Sensoren 60 sind in der Regel nicht-fehlersicher ausgebildet. Der Ein-/Ausgabeeinheit 26 werden unter Verwendung von nicht-sicherheitsrelevanten Programmausgangsvariablen Momentanwerte von nicht-sicherheitsrelevanten Steuerungsausgangssignalen 62 zugeführt, die nicht-sicherheitsrelevanten Aktuatoren 64 zu deren Ansteuerung zugeführt werden. Bei den nicht-sicherheitsrelevanten Aktuatoren 64 kann es sich beispielsweise um Motoren oder Stellzylinder handeln. Die Momentanwerte der nicht-sicherheitsrelevanten Steuerungsausgangssignale 62 werden in Abhängigkeit der nicht-sicherheitsrelevanten Steuerungseingangssignale 58 gemäß den Standardsteueranweisungen ermittelt. Hierbei kann es erforderlich sein, Zwischengrößen zu ermitteln, deren Momentanwerte nicht-sicherheitsrelevanten Programmzwischenvariablen zugewiesen werden. Die Momentanwerte der nicht-sicherheitsrelevanten Programmzwischenvariablen werden mittels zweiter nicht-sicherheitsrelevanter Daten 66 einem Arbeitsspeicher 68 zugeführt und dort zwischengespeichert werden.

Im Rahmen der Bearbeitung der ersten aktuellen Sicherheitssteueranweisung 50, bei der es sich um eine sicherheitsrelevante Steueranweisung handelt, werden erste sicherheitsrelevante Daten 70 zwischen dem ersten Prozessor 20 und der Ein-/Ausgabeeinheit 26 ausgetauscht. Hierbei werden dem ersten Prozessor 20 unter Verwendung von sicherheitsrelevanten Programmeingangsvariablen Momentanwerte von sicherheitsrelevanten Steuerungseingangssignalen 72 zugeführt, die von sicherheitsrelevanten Sensoren 74 erzeugt werden. Bei den sicherheitsrelevanten Sensoren 74 handelt es sich beispielsweise um Not-Aus-Taster, Schutztürschalter, Lichtgitter, Drehzahlüberwachungsgeräte oder andere Sensoren zur Aufnahme sicherheitsrelevanter Parameter. Der Ein-/Ausgabeeinheit 26 werden unter Verwendung von sicherheitsrelevanten Programmausgangsvariablen Momentanwerte von sicherheitsrelevanten Steuerungsausgangssignalen 76 zugeführt, die sicherheitsrelevanten Aktuatoren 78 zu deren Ansteuerung zugeführt werden. Bei den sicherheitsrelevanten Aktuatoren 78 handelt es sich beispielsweise um Schütze, deren Arbeitskontakte in der Verbindung zwischen einer Stromversorgung 80 und dem Verbraucher 18 angeordnet sind, um sicherheitsrelevante Magnetventile oder um andere Aktuatoren, mit denen ein gefährlicher Antrieb zuverlässig stillgesetzt werden kann. Somit kann die Stromversorgung 80 des Verbrauchers 18 abgeschaltet werden, wodurch es möglich ist, bei Auftritt einer entsprechenden Fehlfunktion zumindest den Verbraucher 18 in einen sicheren Zustand zu überführen. Die Momentanwerte der sicherheitsrelevanten Steuerungsausgangssignale 76 werden in Abhängigkeit der sicherheitsrelevanten Steuerungseingangssignale 72 gemäß den Sicherheitssteueranweisungen ermittelt. Hierbei kann es erforderlich sein, sicherheitsrelevante Zwischengrößen zu ermitteln, deren Momentanwerte sicherheitsrelevanten Programmzwischenvariablen zugewiesen werden. Die Momentanwerte der sicherheitsrelevanten Programmzwischenvariablen werden mittels zweiter sicherheitsrelevanter Daten 82 dem Arbeitsspeicher 68 zugeführt und dort zwischengespeichert.

Im Rahmen der Bearbeitung der zweiten aktuellen Sicherheitssteueranweisung 54, bei der es sich um eine sicherheitsrelevante Steueranweisung handelt, wird entsprechend der ersten aktuellen Sicherheitssteueranweisung 50 verfahren. Bezüglich der zweiten aktuellen Sicherheitssteueranweisung 54 werden dritte sicherheitsrelevante Daten 84, die den ersten sicherheitsrelevanten Daten 70 entsprechen, und vierte sicherheitsrelevante Daten 86, die den zweiten sicherheitsrelevanten Daten 82 entsprechen, in entsprechender Weise verwendet.

Der erste Prozessor 20 ist somit dazu ausgebildet, durch logische Verknüpfungen einer Vielzahl von ersten Programmvariablen zumindest einen Teil der Steueranweisungen des Anwenderprogramms abzuarbeiten. Der erste Prozessor 20 ist Teil eines ersten Kanals 88, der als Kanal A bezeichnet wird. Der zweiten Prozessor 22 ist somit dazu ausgebildet, durch Verarbeiten einer Vielzahl von zweiten Programmvariablen zumindest einen Teil der Steuerungsanweisungen des Anwenderprogramms abzuarbeiten. Der zweite Prozessor 22 ist Teil eines zweiten Kanals 90, der als Kanal B bezeichnet wird.

Für das Speichern von nullspannungssicheren Daten ist in der Sicherheitssteuerung 10 ein Datenspeicher 92 vorhanden. Bei diesen nullspannungssicheren Daten handelt es sich um solche Daten, die beispielsweise beim Einschalten der Sicherheitssteuerung 10 nach einem Spannungsausfall und somit dem Hochfahren der zu steuernden Anlage 12 vorhanden sein müssen. Dieser Datenspeicher ist als nicht-flüchtiger Datenspeicher ausgebildet. Der Datenspeicher 92 ist dem ersten Prozessor 20 zugeordnet, also demjenigen Prozessor, der sowohl Sicherheitssteueranweisungen als auch Standardsteueranweisungen verarbeitet. Dies hat den Vorteil, dass in einfacher Art und Weise sicherheitsrelevante Daten und nicht sicherheitsrelevante Daten, die von dem ersten Prozessor 20 verarbeitet werden, in dem Datenspeicher 92 gespeichert werden können. Sicherheitsrelevante Daten, die in dem zweiten Prozessor 22 verarbeitet werden und in dem Datenspeicher 92 gespeichert werden sollen, werden dem ersten Prozessor 20 über die bidirektionale Kommunikationsschnittstelle 24 zum Einschreiben in den Datenspeicher 92 zugeführt. In entsprechend umgekehrter Vorgehensweise erhält der zweite Prozessor 22 in dem Datenspeicher 92 gespeicherte Daten zurück. Die Zuordnung des Datenspeichers 92 zu dem ersten Prozessor 20 soll keine einschränkende Wirkung haben. Es ist auch denkbar, den Datenspeicher 92 dem zweiten Prozessor 22 zuzuordnen. Ebenso ist es denkbar, dass beide Prozessoren 20, 22 direkt auf den Datenspeicher 92 zugreifen können.

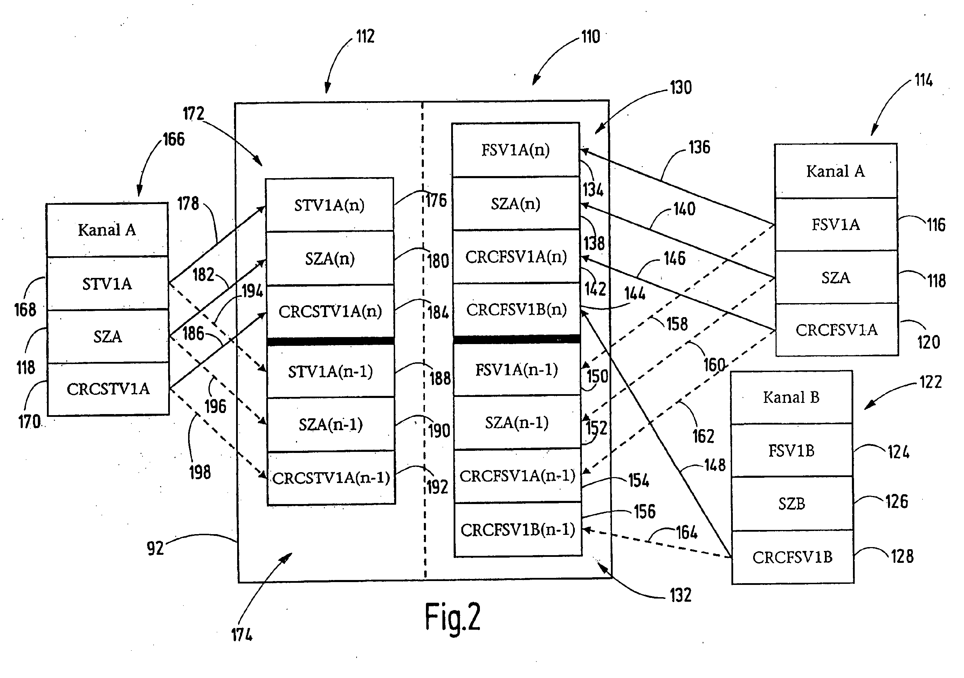

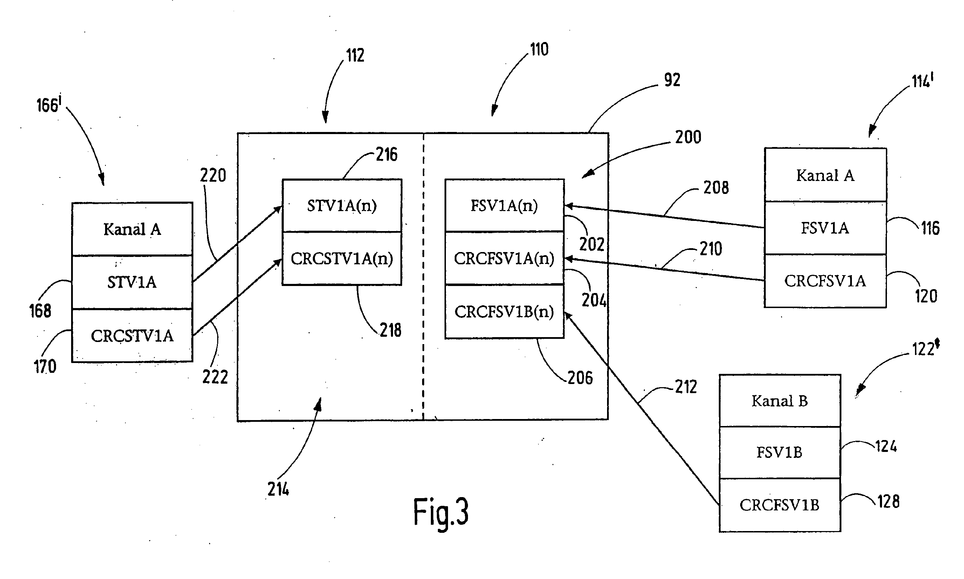

Das Einschreiben von Daten in den Datenspeicher 92 ist durch einen Pfeil 94 und das Auslesen von Daten aus dem Datenspeicher 92 ist durch einen Pfeil 96 dargestellt. Welche Daten konkret in den Datenspeicher 92 geschrieben und somit in ihm gespeichert werden, wird im Zusammenhang mit den Fig. 2 und 3 erläutert.

Über die Ein-/Ausgabeeinheit 26 werden zwischen der Sicherheitssteuerung 10 und den sicherheitsrelevanten Sensoren 74 sowie den sicherheitsrelevanten Aktuatoren 78 Testsignale 98 ausgetauscht. Mit Hilfe der Testsignale 98 kann in der Sicherheitssteuerung 10 festgestellt werden, ob die an sie angeschlossenen Komponenten fehlerfrei arbeiten, was erforderlich ist, da ein sicherer Zustand der zu steuernden Anlage 12 gewährleistet sein muss, sobald an einem mit der Sicherheitssteuerung 10 verbundenen Geräte eine Fehlfunktion auftritt.

Die vorstehenden Ausführungen, gemäß denen sowohl vom ersten Prozessor 20 als auch vom zweiten Prozessor 22 Momentanwerte für die sicherheitsrelevanten Steuerungsausgangssignale 76 erzeugt werden, bedeutet nicht, dass die von diesen beiden Prozessoren 20, 22 erzeugten Momentanwerte gleichzeitig als Steuerungsausgangssignale 76 ausgegeben werden. Die vorstehenden Ausführungen sollen lediglich den bezüglich der zu erledigenden Sicherheitsaufgaben redundanten Aufbau der Sicherheitssteuerung 10 wiedergeben. Beide Prozessoren 20, 22 sind dazu ausgebildet, Momentanwerte für die sicherheitsrelevanten Steuerungsausgangssignale 76 zu ermitteln. Während des fehlerfreien Betriebs der Sicherheitssteuerung 10 werden lediglich die von einem Prozessor, beispielsweise dem ersten Prozessor 20, ermittelten Werte ausgegeben. Die in Fig. 2 gewählte Darstellung, gemäß der in der Sicherheitssteuerung 10 sowohl nicht-sicherheitsrelevante Steueranweisungen als auch sicherheitsrelevante Steueranweisungen verarbeitet werden, soll keine einschränkende Wirkung haben. Es ist auch denkbar, dass die Sicherheitssteuerung 10 für die ausschließliche Verarbeitung von sicherheitsrelevanten Steueranweisungen ausgebildet ist.

In Fig. 2 ist der Datenspeicher 92 dargestellt, in den verschiedene Werte nach einer ersten Ausführungsform gespeichert werden. Der Datenspeicher 92 weist einen ersten Speicherteilbereich 110 auf, der für das Abspeichern von sicherheitsrelevanten Programmvariablen vorgesehen ist. Ferner weist der Datenspeicher 92 einen zweiten Speicherteilbereich 112 auf, der für das Abspeichern von nicht-sicherheitsrelevanten Programmvariablen vorgesehen ist. Dieser Aufbau des Datenspeichers 92 soll keine einschränkende Wirkung haben. Es ist auch denkbar, zwei baulich eigenständige Datenspeicher vorzusehen, von denen einer für die sicherheitsrelevanten Programmvariablen und der andere für die nicht-sicherheitsrelevanten Programmvariablen vorgesehen ist.

Wie bereits im Zusammenhang mit Fig. 1 ausgeführt, ist die Sicherheitssteuerung 10 zweikanalig redundant aufgebaut. Mit der Bezugsziffer 114 ist eine in einem ersten Kanal 88 stattfindende Verarbeitung einer Vielzahl von ersten sicherheitsrelevanten Programmvariablen bezeichnet. Eine der in dem ersten Kanal 88 verarbeiteten ersten sicherheitsrelevanten Programmvariablen ist die mit der Bezugsziffer 116 bezeichnete sicherheitsrelevante Programmvariable FSV1A. Die verwendete Nomenklatur hat dabei folgende Bedeutung: FS steht für "failsafe" und zeigt somit an, dass es sich um eine sicherheitsrelevante Programmvariable handelt. V1 ist der eigentliche Name der betrachteten sicherheitsrelevanten Programmvariablen, anhand dem diese in der Vielzahl von ersten sicherheitsrelevanten Programmvariabeln, die von dem ersten Prozessor 20 verarbeitet werden, identifiziert werden kann. Der Buchstabe A weist darauf hin, dass es sich um eine in dem ersten Kanal 88 verarbeitete Programmvariable handelt. Diese Nomenklatur wird für die Fig. 2 und 3 einheitlich verwendet.

Mit der Bezugsziffer 118 ist ein im ersten Kanal 88 verwendeter Schreibzähler SZA bezeichnet. Der Wert des Schreibzählers SZA gibt dabei die Anzahl der Schreibvorgänge an, mit denen Momentanwerte der sicherheitsrelevanten Programmvariablen FSV1A in den ersten Speicherteilbereich 110 geschrieben sind. Bezugsziffer 120 bezeichnet eine in dem ersten Kanal 88 durchgeführte Prüfwertermittlung CRCFSV1A für die sicherheitsrelevante Programmvariable FSV1A. Durch die Buchstaben CRC (cyclic redundancy check) ist angedeutet, dass besagte Prüfwertermittlung nach einem CRC-Verfahren erfolgt.

Mit der Bezugsziffer 122 ist eine in einem zweiten Kanal 90 stattfindende Verarbeitung einer Vielzahl von zweiten sicherheitsrelevanten Programmvariablen bezeichnet. Eine der in dem zweiten Kanal 90 verarbeiteten zweiten sicherheitsrelevanten Programmvariablen ist die mit der Bezugsziffer 124 bezeichnete sicherheitsrelevante Programmvariable FSV1B. Der Buchstabe B weist darauf hin, dass es sich um eine in dem zweiten Kanal 90 verarbeitete Programmvariable handelt. Mit der Bezugsziffer 126 ist ein im zweiten Kanal 90 verwendeter Schreibzähler SZB bezeichnet. Der Wert des Schreibzählers SZB entspricht dabei dem Wert des Schreibzählers SZA. Bezugsziffer 128 bezeichnet eine in dem zweiten Kanal 90 durchgeführte Prüfwertermittlung CRCFSV1B für die sicherheitsrelevante Programmvariable FSV1B.

Die sicherheitsrelevante Programmvariable FSV1B korrespondiert dabei mit der sicherheitsrelevanten Programmvariablen FSV1A. Darunter ist Folgendes zu verstehen: Wie bereits in Zusammenhang mit Fig. 1 ausgeführt, sind für ein fehlersicheres Arbeiten der Sicherheitssteuerung 10 in dem Programmspeicher 32 ein erster Maschinencode 40 für den ersten Kanal 88 und ein zweiter Maschinencode 42 für den zweiten Kanal 90 abgespeichert, wobei beide Maschinencodes 40, 42 jeweils einen eigenständigen Sicherheitscode 44, 48 umfassen. Mit jedem der beiden Sicherheitscodes 44, 48 werden dieselben sicherheitsrelevanten Steuerungseingangssignale 72 der sicherheitsrelevanten Sensoren 74 verarbeitete und für dieselben sicherheitsrelevanten Aktuatoren 78 sicherheitsrelevante Steuerungsausgangssignale 76 ermittelt. Hierfür enthält jeder der beiden Sicherheitscodes 44, 48 eigene Programmvariablen, der erste Sicherheitscode 44 erste sicherheitsrelevante Programmvariablen und der zweite Sicherheitscode 48 zweite sicherheitsrelevante Programmvariablen. Diese sind zwar in dem Sinne voneinander unabhängig, dass die ersten Programmvariablen und die zweiten Programmvariablen eigenständige Speicherbereiche in den jeweiligen Speichern belegen. Die beiden Sicherheitscodes 44, 48 enthalten jedoch paarweise korrespondierende Programmvariablen. So enthält sowohl der erste Sicherheitscode 44 als auch der zweite Sicherheitscode 48 beispielsweise jeweils eine sicherheitsrelevante Programmeingangsvariable, mit dem Momentanwerte des von demselben Not-Aus-Tasters erzeugten Sensorsignals eingelesen werden können. Entsprechendes gilt für sicherheitsrelevante Programmausgangsvariablen und gegebenenfalls benötigte sicherheitsrelevante Programmzwischenvariablen.

In dem ersten Speicherteilbereich 110 werden nun Momentanwerte der sicherheitsrelevanten Programmvariablen FSV1A, Werte des Schreibzählers SZA, und mit den beiden Prüfwertermittlungen CRCFSV1A und CRCFSV1B ermittelte Prüfwerte wie folgt abgespeichert: Der erste Speicherteilbereich weist zwei Speicherbereiche 130, 132 auf. Ein zu einem ersten definierten Zeitpunkt vorliegender Momentanwert FSV1A(n) der ersten Programmvariablen FSV1A wird in dem ersten Speicherbereich 130 in einer ersten Speicherzelle 134 abgespeichert, was durch einen Pfeil 136 dargestellt ist. Die verwendete Nomenklatur hat dabei folgende Bedeutung: Der angehängte Klammerausdruck (n) zeigt an, dass es sich um einen Momentanwert handelt. Dieser Momentanwert liegt dabei zu einem ersten definierten Zeitpunkt vor, wobei dieser Zeitpunkt innerhalb des Taskzykluses n liegt. Der Taskzyklus ist dabei diejenige Zeitdauer, die die Sicherheitssteuerung 10 benötigt, das Anwenderprogramm einmal zu durchlaufen, beginnend mit dem Aktualisieren des Eingangsabbildes, dem Abarbeiten der einzelnen Steueranweisungen und endend mit dem Bereitstellen des Ausgangsabbildes. Folglich reicht es beispielsweise bei einer sicherheitsrelevanten Programmeingangsvariablen und einer sicherheitsrelevanten Programmausgangsvariablen aus, als kleinste Zeiteinheit auf den Taskzyklus abzustellen, da für diese Programmvariablen pro Taskzyklus lediglich eine Änderung erfolgt. Somit ergibt sich folgende Bedeutung: Der Kleinbuchstabe n bezeichnet einen ersten definierten Zeitpunkt und somit denjenigen Taskzyklus, in dem dieser Zeitpunkt liegt. Der Term (n-1) bezeichnet einen älteren Zeitpunkt und somit einen der vorhergehenden Taskzyklen. Der Term (n+1) bezeichnet einen jüngeren Zeitpunkt und somit einen der nachfolgenden Taskzyklen.

Der zu dem ersten definierten Zeitpunkt vorliegende Wert SZA(n) des Schreibzählers SZA wird ebenfalls in dem ersten Speicherbereich 130 abgespeichert, und zwar in eine zweite Speicherzelle 138, was durch einen Pfeil 140 dargestellt ist. Des Weiteren werden in dem ersten Speicherbereich 130 ein erster Prüfwert CRCFSV1A(n), der in Abhängigkeit des Momentanwertes FSV1A(n) von der Prüfwertermittlung CRCFSV1A ermittelt wird und ein zweiter Prüfwert CRCFSV1B(n) abgespeichert, und zwar in einer dritten Speicherzelle 142 und in einer vierten Speicherzelle 144, was durch Pfeile 146, 148 dargestellt ist.

Der mit der zweiten Prüfwertermittlung CRCFSV1B ermittelte zweite Prüfwert CRCFSV1B(n) korrespondiert dabei mit dem ersten Prüfwert CRCFSV1A(n). Zum einen wird der zweite Prüfwert CRCFSV1B(n) in Abhängigkeit eines Momentanwertes derjenigen zweiten Programmvariablen FSV1B ermittelt, die mit der ersten Programmvariablen FSV1A korrespondiert. Ferner liegt der Momentanwert der zweiten Programmvariablen FSV1B in demselben Taskzyklus vor, wie der Momentanwert FSV1A(n) der ersten Programmvariablen FSV1A. Vorzugsweise werden die beiden Prüfwerte CRCFSV1A(n) und CRCFSV1B(n) diversitär ermittelt. Hierzu sind die beiden Prüfwertermittelung CRCFSV1A und CRCFSV1B hardwaretechnisch und/oder softwaretechnisch diversitär ausgeführt.

In dem zweiten Speicherbereich 132 sind für einen älteren Zeitpunkt und somit einen vorhergehenden Taskzyklus ein Momentanwert FSV1A(n-1) der ersten Programmvariablen FSV1A, ein Wert SZA(n-1) des Schreibzählers SZA, ein erster Prüfwert CRCFSV1A(n-1) und ein zweiter Prüfwert CRCFSV1B(n-1) in einer fünften Speicherzelle 150, einer sechsten Speicherzelle 152, einer siebten Speicherzelle 154 und einer achten Speicherzelle 156 abgespeichert, was durch Pfeile 158, 160, 162, 164 dargestellt ist. Die einzelnen in dem Speicherbereich 132 gespeicherten Werte werden in entsprechender Weise ermittelt, wie dies für die entsprechenden, in dem Speicherbereich 130 gespeicherten Werte beschrieben ist.

Die in den Speicherzellen 134, 138, 142, 150, 152, 154 gespeicherten Werten werden von dem ersten Prozessor 20 ermittelt. Die in den Speicherzellen 144, 156 gespeicherten Werte werden von dem zweiten Prozessor 22 ermittelt.

Sowohl der Momentanwert der ersten Programmvariablen FSV1A als auch die beiden mit den Prüfwertermittelungen CRCFSV1A und CRCFSV1B ermittelten Prüfwerte werden abwechselnd in den beiden Speicherbereichen 130, 132 gespeichert. Die beiden Prüfwerte werden somit wiederholt für aufeinanderfolgende Zeitpunkte ermittelt und abgespeichert. Für einen jüngeren Zeitpunkt und somit einen nachfolgenden Taskzyklus werden der zu diesem Zeitpunkt vorliegende Momentanwert FSV1A(n+1) und die beiden Prüfwerte CRCFSV1A(n+1) und CRCFSV1B(n+1) dann in den entsprechenden Speicherzellen 150, 152, 154, 156 des Speicherbereiches 132 gespeichert.

Der Datenspeicher 92 weist zwei Speicherbereiche 130, 132 auf, die der sicherheitsrelevanten Programmvariablen FSV1A zugeordnet sind. Werden weitere sicherheitsrelevante Programmvariablen nach der vorstehend beschriebenen Vorgehensweise in dem Datenspeicher 92 gespeichert, so weist dieser für jede dieser Programmvariablen ebenfalls zwei Speicherbereiche auf.

Der erste Prozessor 20 kann dazu ausgebildet sein, einen Momentanwertvergleich durchzuführen. Mit diesem Momentanwertvergleich werden die zu unterschiedlichen Zeitpunkten vorliegenden Momentanwerte der sicherheitsrelevanten Programmvariablen FSV1A untereinander verglichen. Wird durch den Momentanwertvergleich festgestellt, dass sich die beiden Momentanwerte zweier unmittelbar aufeinanderfolgender Zeitpunkte nicht unterscheiden, so kann auf das Speichern des jüngeren Momentanwerte und der beiden jüngeren Prüfwerte verzichtet werden. Mit anderen Worten: es werden nur dann der jüngere Momentanwert und die beiden jüngeren Momentanwerte gespeichert, wenn sich der jüngere Momentanwert von dem für den unmittelbar vorhergehenden Zeitpunkt vorliegenden Momentanwert unterscheidet.

Vorstehend ist ausgeführt, dass beispielsweise der erste Prüfwert CRCFSV1A(n) in Abhängigkeit des Momentanwerts FSV1A(n) durch die Prüfwertermittlung CRCFSV1A ermittelt wird. In entsprechender Weise wird beispielsweise der zweite Prüfwert CRCFSV1B(n) in Abhängigkeit des Momentanwerts FSV1B(n) durch die Prüfwertermittlung CRCFSV1B ermittelt wird. Dies kann so verstanden werden, dass der jeweilige Prüfwert allein für den Momentanwert der zugehörigen sicherheitsrelevanten Programmvariablen ermittelt wird. Alternativ kann der erste Prüfwert CRCFSV1A(n) auch für die Kombination ermittelt werden, die sich aus dem Momentanwert FSV1A(n) und dem Wert SZA(n) des Schreibzählers SZA ergibt. Entsprechend kann für den zweiten Prüfwert CRCFSV1B(n) verfahren werden.

Dem vorstehend beschriebenen Speichern von Momentanwerten, Schreibzählerwerten und Prüfwerten in dem ersten Speicherteilbereich liegt folgende Überlegung zugrunde. Solange beispielsweise kein Spannungsausfall vorliegt, die Sicherheitssteuerung 10 also störungsfrei arbeitet, weisen die beiden sicherheitsrelevanten Programmvariablen FSV1A und FSV1B in den einzelnen Taskzyklen identische Momentanwerte auf. Folglich reicht es aus, in den Datenspeicher 92 lediglich die Momentanwerte der sicherheitsrelevanten Programmvariablen FSV1A abzuspeichern. Die beiden Schreibzähler SZA und SZB weisen innerhalb eines Taskzykluses ebenfalls identische Werte auf.

Anhand der beiden für die beiden Kanäle 88, 90 individuell ermittelten Prüfwerte kann nun überprüft werden, ob der zuletzt in dem Datenspeicher 92 gespeicherte Momentanwert FSV1A(n) gültig ist oder nicht. Hierzu werden beispielsweise bei einem Neustart, der nach einem Spannungsausfall erforderlich ist, dem ersten Prozessor 20 der Momentanwert FSV1A(n) und der erste Prüfwert CRCFSV1A(n) zugeführt.

Dem zweiten Prozessor 22 wird ebenfalls der Momentanwert FSV1A(n), jedoch der zweite Prüfwert CRCFSV1B(n) zugeführt. Hat die Sicherheitssteuerung 10 in dem Zeitfenster störungsfrei gearbeitet, in welchem die beiden Prüfwerte CRCFSV1A(n) und CRCFSV1B(n) ermittelt und sowohl der Momentanwert FSV1A(n) als auch diese beiden Prüfwerte im Datenspeicher 92 abgespeichert wurden, dann ergibt eine nochmaliges Ermitteln eines ersten aktuellen Prüfwertes CRCFSV1A(n+1) und eines aktuelle zweiten Prüfwertes CRCFSV1B(n+1), dass sowohl der gespeicherte erste Prüfwert CRCFSV1A(n) und der aktuelle erste Prüfwert CRCFSV1A(n+1) identisch sind als auch der gespeicherte zweite Prüfwert CRCFSV1B(n) und der aktuelle zweite Prüfwert CRCFSV1B(n+1) identisch sind. In diesem Fall ist der gespeicherte Momentanwert FSV1A(n) gültig und kann für die Initialisierung der Sicherheitssteuerung 10 verwendet werden. Er wird in beiden Kanälen 88, 90 verarbeitet. Wird dagegen festgestellt, dass entweder der gespeicherte erste Prüfwert CRCFSV1A(n) und der aktuelle erste Prüfwert CRCFSV1A(n+1) nicht identisch sind oder der gespeicherte zweite Prüfwert CRCFSV1B(n) und der aktuelle zweite Prüfwert CRCFSV1B(n+1) nicht identisch sind, dann ist der gespeicherte Momentanwert FSV1A(n) nicht gültig und kann somit nicht für die Initialisierung der Sicherheitssteuerung 10 verwendet werden. In diesem Fall wird statt dessen der zuvor gespeicherte Momentanwert FSV1A(n-1) für die Initialisierung verwendet. Vorzugsweise wird dieser Momentanwert, bevor er für die Initialisierung verwendet wird, zunächst ebenfalls einer Gültigkeitsüberprüfung unterzogen. Somit können die Sicherheitssteuerung 10 und die Anlage 12 wieder gestartet werden, ohne dass hiefür der Einsatz von Defaultwerten für die erste sicherheitsrelevante Programmvariable FSV1A oder das Durchführen einer Referenzfahrt erforderlich wären.

Bei der vorstehend beschriebenen Gültigkeitsüberprüfung wird zunächst anhand der Werte SZA(n) und SZA(n-1) des Schreibzählers SZA festgestellt, welcher der beiden Momeritanwerte, die in der ersten Speicherzelle 134 und der fünften Speicherzelle 150 gespeichert sind, der jüngere ist. Der jüngere Momentanwert wird zunächst bei der Gültigkeitsüberprüfung geprüft.

Der Datenspeicher 92 weist einen zweiten Speicherteilbereich 112 auf, der für das Abspeichern von nicht-sicherheitsrelevanten Programmvariablen vorgesehen ist, wobei die nicht-sicherheitsrelevanten Programmvariablen in dem ersten Kanal 88 verarbeitet werden.

Mit der Bezugsziffer 166 ist eine in einem ersten Kanal 88 stattfindende Verarbeitung einer Vielzahl von nicht-sicherheitsrelevanten Programmvariablen bezeichnet. Eine der in dem ersten Kanal 88 verarbeiteten ersten nicht-sicherheitsrelevanten Programmvariablen ist die mit der Bezugsziffer 168 bezeichnete sicherheitsrelevante Programmvariable STV1A. Dabei steht ST für "standard" und zeigt somit an, dass es sich um eine nicht-sicherheitsrelevante Programmvariable handelt. Die Bedeutung der Bezeichnung V1 und des Buchstabens A kann den Ausführungen zu der mit der Bezugsziffer 114 bezeichneten Verarbeitung entnommen werden. Bezugsziffer 170 bezeichnet eine in dem ersten Kanal 88 durchgeführte Prüfwertermittlung CRCSTV1A für die nicht-sicherheitsrelevante Programmvariable STV1A.

In dem zweiten Speicherteilbereich 112 werden nun Momentanwerte der nicht-sicherheitsrelevanten Programmvariablen STV1A, Werte des Schreibzählers SZA, und mit der Prüfwertermittlung CRCSTV1A ermittelte Prüfwerte wie folgt abgespeichert: Der zweite Speicherteilbereich 112 weist zwei Speicherbereiche 172, 174 auf. Ein zu einem ersten definierten Zeitpunkt vorliegender Momentanwert STV1A(n) der ersten nicht-sicherheitsrelevanten Programmvariablen STV1A wird in dem dritten Speicherbereich 172 in einer neunten Speicherzelle 176 abgespeichert, was durch einen Pfeil 178 dargestellt ist. Der zu dem ersten definierten Zeitpunkt vorliegende Wert SZA(n) des Schreibzählers SZA wird ebenfalls in einer zehnten Speicherzelle 180 abgespeichert, was durch einen Pfeil 182 dargestellt ist. Des Weiteren wird ein Prüfwert CRCSTV1A(n) abgespeichert, der in Abhängigkeit des Momentanwertes STV1A(n) von der Prüfwertermittlung CRCSTV1A ermittelt wird, und zwar in einer elften Speicherzelle 184, was durch einen Pfeil 186 dargestellt ist.

In dem vierten Speicherbereich 174 sind für einen älteren Zeitpunkt und somit einen vorhergehenden Taskzyklus ein Momentanwert STV1A(n-1) der nicht-sicherheitsrelevanten Programmvariablen STV1A, ein Wert SZA(n-1) des Schreibzählers SZA und ein Prüfwert CRCSTV1A(n-1) einer zwölften Speicherzelle 188, einer dreizehnten Speicherzelle 190 und einer vierzehnten Speicherzelle 192 abgespeichert, was durch Pfeile 194, 196, 198 dargestellt ist. Die einzelnen in dem vierten Speicherbereich 1174 gespeicherten Werte werden in entsprechender Weise ermittelt, wie dies für die entsprechenden, in dem dritten Speicherbereich 172 gespeicherten Werte beschrieben ist. Die in den Speicherzellen 176, 180, 184, 188, 190, 192 gespeicherten Werte werden von dem ersten Prozessor 20 ermittelt.

Sowohl der Momentanwert der nicht-sicherheitsrelevanten Programmvariablen STV1A als auch der mit der Prüfwertermittelung CRCSTV1A ermittelte Prüfwert werden abwechselnd in den beiden Speicherbereichen 172, 174 gespeichert. Für einen jüngeren Zeitpunkt und somit einen nachfolgenden Taskzyklus werden der zu diesem Zeitpunkt vorliegende Momentanwert STV1A(n+1) und der Prüfwert CRCSTV1A(n+1) dann in den entsprechenden Speicherzellen 188, 190, 192 des vierten Speicherbereiches 174 gespeichert.

Der Datenspeicher 92 weist zwei Speicherbereiche 172, 174 auf, die der nicht-sicherheitsrelevanten Programmvariablen STV1A zugeordnet sind. Werden weitere nicht-sicherheitsrelevante Programmvariablen nach der vorstehend beschriebenen Vorgehensweise in dem Datenspeicher 92 gespeichert, so weist dieser für jede dieser Programmvariablen ebenfalls zwei Speicherbereiche auf.

Auch das Speichern von nicht-sicherheitsrelevanten Programmvariablen kann unter Berücksichtigung eines Momentanwertvergleichs erfolgen. Ebenso kann der Wert des Schreibzählers SZA bei dem Ermitteln von Prüfwerten berücksichtigt werden. Die Gültigkeitsprüfung eines zuletzt gespeicherten Momentanwerts STV1A(n) erfolgt entsprechend, wie dies vorstehend für die sicherheitsrelevanten Programmvariabeln beschrieben ist.

In entsprechender Weise kann auch für die nicht-sicherheitsrelevante Programmvariable STV1A überprüft werden, ob der zuletzt in dem Datenspeicher 92 gespeicherte Momentanwert STV1A(n) gültig ist oder nicht.

Hierzu werden beispielsweise bei einem Neustart der Sicherheitssteuerung 10 dem ersten Prozessor 20 der Momentanwert STV1A(n) und der Prüfwert CRCSTV1A(n) zugeführt. Hat die Sicherheitssteuerung 10 in dem Zeitfenster störungsfrei gearbeitet, in welchem der Prüfwert CRCSTV1A(n) ermittelt und sowohl der Momentanwert STV1A(n) als auch der Prüfwert CRCSTV1A(n) im Datenspeicher 92 abgespeichert wurden, dann ergibt eine nochmaliges Ermitteln eines aktuellen Prüfwertes CRCSTV1A(n+1), dass der gespeicherte Prüfwert CRCSTV1A(n) und der aktuelle Prüfwert CRCSTV1A(n+1) identisch sind. In diesem Fall ist der gespeicherte Momentanwert STV1A(n) gültig und kann für die Initialisierung der Sicherheitssteuerung 10 verwendet werden. Er wird in dem ersten Kanal 88 verarbeitet. Wird dagegen festgestellt, dass der gespeicherte Prüfwert CRCSTV1A(n) und der aktuelle Prüfwert CRCSTV1A(n+1) nicht identisch sind, dann ist der gespeicherte Momentanwert STV1A(n) nicht gültig und kann somit nicht für die Initialisierung der Sicherheitssteuerung 10 verwendet werden. In diesem Fall wird statt dessen der zuvor gespeicherte Momentanwert STV1A(n-1) für die Initialisierung verwendet. Vorzugsweise wird dieser Momentanwert, bevor er für die Initialisierung verwendet wird, zunächst ebenfalls einer Gültigkeitsüberprüfung unterzogen. Somit können die Sicherheitssteuerung 10 und die Anlage 12 wieder gestartet werden, ohne dass hiefür der Einsatz von Defaultwerten für die nicht-sicherheitsrelevante Programmvariable STV1A oder das Durchführen einer Referenzfahrt erforderlich wären.

Bei der vorstehend beschriebenen Gültigkeitsüberprüfung wird zunächst anhand der Werte SZA(n) und SZA(n-1) des Schreibzählers SZA festgestellt, welcher der beiden Momentanwerte, die in der neunten Speicherzelle 176 und der zwölften Speicherzelle 188 gespeichert sind, der jüngere ist. Der jüngere Momentanwert wird zunächst bei der Gültigkeitsüberprüfung geprüft.

Die mit dem ersten Prozessor 20 verarbeiteten Programmvariablen werden zusammenfassend als erste Programmvariablen und die mit dem zweiten Prozessor 22 verarbeiteten Programmvariabeln werden zusammenfassend als zweite Programmvariablen bezeichnet.

In Fig. 3 ist der Datenspeicher 92 dargestellt, in den verschiedene Werte nach einer zweiten Ausführungsform gespeichert werden.

Mit der Bezugsziffer 114' ist eine in dem ersten Kanal 88 stattfindende Verarbeitung einer Vielzahl von ersten sicherheitsrelevanten Programmvariablen bezeichnet, die sich von der Verarbeitung 114 dadurch unterscheidet, dass kein Schreibzähler SZA berücksichtigt wird. In entsprechender Weise bezeichnet die Bezugsziffer 122' eine in dem zweiten Kanal 90 stattfindende Verarbeitung von zweiten sicherheitsrelevanten Programmvariablen und die Bezugsziffer 166' eine in dem ersten Kanal 88 stattfindende Verarbeitung von nicht-sicherheitsrelevanten Programmvariablen.

In einem fünften Speicherbereich 200 sind ein Momentanwert FSV1A(n) der ersten Programmvariablen FSV1A, ein erster Prüfwert CRCFSV1A(n) und ein zweiter Prüfwert CRCFSV1B(n) in einer fünfzehnten Speicherzelle 202, einer sechzehnten Speicherzelle 204 und einer siebzehnten Speicherzelle 206 abgespeichert, was durch Pfeile 208, 210, 212 dargestellt ist. In einem sechsten Speicherbereich 214 sind ein Momentanwert STV1A(n) der einer nicht-sicherheitsrelevanten Programmvariablen STV1A und ein Prüfwert CRCSTV1A(n) in einer achtzehnten Speicherzelle 216 und einer neunzehnten Speicherzelle 218 abgespeichert, was durch Pfeile 220, 222 dargestellt ist.

Die in den Speicherzellen 202, 204, 216, 218 gespeicherten Werte werden von dem ersten Prozessor 20 ermittelt. Der in der Speicherzelle 206 gespeicherte Wert wird von dem zweiten Prozessor 22 ermittelt. Die einzelnen gespeicherten Werte werden entsprechend den Ausführungen zu Fig. 2 ermittelt.

Sollen weitere sicherheitsrelevante Programmvariablen in dem Datenspeicher 92 gespeichert werden, so weist dieser eine entsprechend größere Anzahl von fünften Speicherbereichen 200 auf. Entsprechendes gilt für die nicht-sicherheitsrelevanten Programmvariablen und den sechsten Speicherbereich 214. Ebenfalls kann das Speichern der nicht-sicherheitsrelevanten Programmvariablen und der sicherheitsrelevanten Programmvariablen unter Berücksichtigung eines Momentanwertvergleichs erfolgen.

Die Gültigkeitsüberprüfung der gespeicherten Momentanwerte FSV1A(n) und STV1A(n) erfolgt ebenso, wie dies im Zusammenhang mit Fig. 2 beschrieben ist. Allerdings mit folgendem Unterschied: wird festgestellt, dass beispielsweise der Momentanwert FSV1A(n) nicht gültig ist, so ist in dem Datenspeicher 92 kein weiterer Momentanwert für die erste sicherheitsrelevante Programmvariable FSV1A abgespeichert, der anstelle des Momentanwerts FSV1A(n) verwendet werden könnte. In diesem Fall muss die Sicherheitssteuerung 10 entweder mit einem Defaultwert für die erste sicherheitsrelevante Programmvariable FSV1A initialisiert werden oder es muss eine Referenzfahrt mit der Anlage 12 durchgeführt werden. Entsprechendes gilt für die nicht-sicherheitsrelevante Programmvariable STV1A.

Das anhand von Fig. 3 beschriebene Speicherkonzept hat jedoch gegenüber dem anhand von Fig. 2 beschriebenen Speicherkonzept den Vorteil, dass der Datenspeicher 92 kleiner dimensioniert werden kann und somit kostengünstiger ist.

Auf das Speicherkonzept, welches beim Speichern von nicht-sicherheitsrelevanten Daten angewendet wird, ist in der vorliegenden Anmeldung explizit kein Schutz gerichtet. Es bleibt vorbehalten, ein auf dieses Speicherkonzept gerichtetes Schutzbegehren zu formulieren und zu verfolgen.

## Patentansprüche

1. Sicherheitssteuerung zum Steuern einer automatisierten Anlage (12) gemäß einem in der Sicherheitssteuerung ablaufenden Anwenderprogramm (34), wobei die Anlage (12) eine Vielzahl von Sensoren (16) und eine Vielzahl von Aktuatoren (14) umfasst, und wobei das Anwenderprogramm (34) eine Vielzahl von Steueranweisungen (44, 46, 48) zum Steuern der Aktuatoren (14) umfasst,
mit einem ersten Prozessor (20), der dazu ausgebildet ist, durch Verarbeiten einer Vielzahl von ersten Programmvariablen zumindest einen Teil der Steueranweisungen (44) abzuarbeiten,
mit einem zweiten Prozessor (22), der dazu ausgebildet ist, durch Verarbeiten einer Vielzahl von zweiten Programmvariablen zumindest einen Teil der Steuerungsanweisungen (48) abzuarbeiten, und
mit einem nicht-flüchtigen Datenspeicher (92) zum Speichern von nullspannungssicheren Daten, die beim Einschalten der Sicherheitssteuerung nach einem Spannungsausfall vorhanden sein müssen,
wobei der erste und der zweite Prozessor (20, 22) jeweils dazu ausgebildet sind, Prüfwerte zu ermitteln, mit denen die Gültigkeit eines in dem Datenspeicher (92) gespeicherten Wertes überprüft werden kann,
**dadurch gekennzeichnet, dass** der erste Prozessor (20) dazu ausgebildet ist, für zumindest eine der ersten Programmvariablen (FSV1A) einen ersten Prüfwert (CRCFSV1A(n)) in Abhängigkeit eines für diese erste Programmvariable (FSV1A) zu einem ersten definierten Zeitpunkt vorliegenden Momentanwertes (FSV1A(n)) zu ermitteln, dass der zweite Prozessor (22) weiter dazu ausgebildet ist, einen mit dem ersten Prüfwert (CRCFSV1A(n)) korrespondierenden zweiten Prüfwert (CRCFSV1B(n)) zu ermitteln, und dass der Datenspeicher (92) dazu ausgebildet ist, den Momentanwert (FSV1A(n)), den ersten Prüfwert (CRCFSV1A(n)) und den zweiten Prüfwert (CRCFSV1B(n)) abzuspeichern, wobei die Sicherheitssteuerung (10) dazu ausgebildet ist, bei deren Neustart eine Gültigkeitsüberprüfung des Momentanwertes (FSV1A(n)) durchzuführen, wobei die Sicherheitssteuerung (10) weiter dazu ausgebildet ist, mittels des ersten Prozessors (20) den Momentanwert (FSV1A(n)) mit dem ersten Prüfwert (CRCFSV1A(n)) zu plausibiliseren und mittels des zweiten Prozessors (22) den Momentanwert (FSV1A(n)) mit dem zweiten Prüfwert (CRCFSV1B(n)) zu plausibilisieren.

2. Sicherheitssteuerung nach Anspruch 1, **dadurch gekennzeichnet, dass** der zweite Prozessor (22) weiter dazu ausgebildet ist, den zweiten Prüfwert (CRCFSV1B(n)) in Abhängigkeit eines Momentanwertes (FSV1B(n)) einer der zweiten Programmvariablen (FSV1B) zu ermitteln, wobei die zweite Programmvariable (FSV1B) mit der ersten Programmvariable (FSV1A) korrespondiert.

3. Sicherheitssteuerung nach Anspruch 2, **dadurch gekennzeichnet, dass** der Momentanwert (FSV1A(n) der ersten Programmvariabeln (FSV1A) und der Momentanwert (FSV1B(n)) der zweiten Programmvariablen (FSV1B) in demselben Taskzyklus (n) vorliegen.

4. Sicherheitssteuerung nach einem der vorstehenden Ansprüche, **dadurch gekennzeichnet, dass** die Sicherheitssteuerung (10) dazu ausgebildet ist, die beiden Prüfwerte (CRCFSV1A(n), CRCFSV1B(n)) diversitär zu ermitteln.

5. Sicherheitssteuerung nach einem der vorstehenden Ansprüche, **dadurch gekennzeichnet, dass** die Sicherheitssteuerung (10) dazu ausgebildet ist, die beiden Prüfwerte (CRCFSV1A(n), CRCFSV1B(n)) wiederholt für aufeinanderfolgende Zeitpunkte zu ermitteln.

6. Sicherheitssteuerung nach einem der vorstehenden Ansprüche, **dadurch gekennzeichnet, dass** der erste Prozessor (20) weiter dazu ausgebildet ist, einen Momentanwertvergleich durchzuführen.

7. Sicherheitssteuerung nach einem der vorstehenden Ansprüche, **dadurch gekennzeichnet, dass** der Datenspeicher (92) zwei der ersten Programmvariabeln (116) zugeordnete Speicherbereiche (130,132) aufweist.

8. Sicherheitssteuerung nach Anspruch 7, dass die Sicherheitssteuerung (10) dazu ausgebildet ist, den Momentanwert (FSV1A(n)) und die beiden Prüfwerte (CRCFSV1A(n)), CRCFSV1B(n)) abwechselnd in die beiden Speicherbereiche (130, 132) zu speichern.

9. Sicherheitssteuerung nach Anspruch 8, **dadurch gekennzeichnet, dass** zumindest einer der beiden Prozessoren (20, 22) dazu ausgebildet ist, einen Wert (SZA(n), SZB(n)) für einen Schreibzähler (SZA, SZB) zu ermitteln, wobei der Schreibzähler (SZA, SZB) repräsentiert, welcher der beiden Speicherbereiche (130, 132) den jeweils jüngsten Momentanwert enthält.

10. Sicherheitssteuerung nach Anspruch 9, **dadurch gekennzeichnet, dass** der erste Prozessor (20) weiter dazu ausgebildet ist, den ersten Prüfwert (CRCFSV1A(n)) in Abhängigkeit des Momentanwertes (FSV1A(n)) und des Wertes (SZA(n)) des Schreibzählers (SZA) zu ermitteln.

11. Sicherheitssteuerung nach einem der vorstehenden Ansprüche, **dadurch gekennzeichnet, dass** es sich bei den ersten und bei den zweiten Programmvariablen jeweils um sicherheitsrelevante Programmvariablen handelt.

12. Verfahren zum Steuern einer automatisierten Anlage (12) mit Hilfe einer Sicherheitssteuerung, die einen ersten Prozessor (20) und einen zweiten Prozessor (22) aufweist, wobei die Anlage (12) eine Vielzahl von Sensoren (16) und eine Vielzahl von Aktuatoren (14) umfasst, mit den Schritten:
- Verarbeiten einer Vielzahl von ersten Programmvariablen mit dem ersten Prozessor (20),
- Ermitteln eines ersten Prüfwerts (CRCFSV1A(n)) für zumindest eine der ersten Programmvariablen (FSV1A) in Abhängigkeit eines für diese erste Programmvariable (FSV1A) zu einem ersten definierten Zeitpunkt vorliegenden Momentanwertes (FSV1A(n)) mit Hilfe des ersten Prozessors (20),
- Verarbeiten einer Vielzahl von zweiten Programmvariablen mit dem zweiten Prozessor (22),
- Ermitteln eines mit dem ersten Prüfwert (CRCFSV1A(n)) korrespondierenden zweiten Prüfwerts (CRCFSV1B(n)) mit dem zweiten Prozessor (22),
- Abspeichern des Momentanwerts (FSV1A(n)), des ersten Prüfwerts (CRCFSV1A(n)) und des zweiten Prüfwerts (CRCFSV1B(n)) in einem nicht-flüchtigen Datenspeicher (92), und
- Durchführen einer Gültigkeitsprüfung des Momentanwerts (FSV1A(n)) bei einem Neustart der Sicherheitssteuerung, wobei die Sicherheitssteuerung (10) mittels des ersten Prozessors (20) den Momentanwert (FSV1A(n)) mit dem ersten Prüfwert (CRCFSV1A(n)) plausibilisiert und mittels des zweiten Prozessors (22) den Momentanwert (FSV1A(n)) mit dem zweiten Prüfwert (CRCFSV1B(n)) plausibilisiert.

13. Computerprogrammprodukt mit einem Datenträger mit Programmcode, der dazu ausgebildet ist, ein Verfahren nach Anspruch 12 durchzuführen, wenn der Programmcode auf einer Sicherheitssteuerung (10) nach einem der Ansprüche 1 bis 11 abläuft.

## Claims

1. A safety-related control unit for controlling an automated installation (12) in accordance with an application program (34) running in the safety-related control unit, the installation (12) comprising a plurality of sensors (16) and a plurality of actuators (14), and the application program (34) comprising a plurality of control instructions (44, 46, 48) for controlling the actuators (14), and the safety-related control unit comprising
a first processor (20) designed for executing at least some of the control instructions (44) by processing a plurality of first program variables,
a second processor (22) designed for executing at least some of the control instructions (48) by processing a plurality of second program variables,
a non-volatile data memory (92) for storing zero-voltage-proof data which must be present when the safety-related control unit is switched on after a voltage failure,
with the first and second processor (20, 22) each being designed for determining test values which can be used for checking the validity of a value stored in the data memory (92),
**characterized in that** the first processor (20) is designed for determining a first test value (CRCFSV1A(n)) for at least one of the first program variables (FSV1A) in dependence on an instantaneous value (FSV1A(n)) present for this first program variable (FSV1A) at a first defined instance of time, the second processor (22) further being designed for determining a second test value (CRCFSV1B(n)) corresponding to the first test value (CRCFSV1A(n)), and the data memory (92) being designed for storing the instantaneous value (FSV1A(n)), the first test value (CRCFSV1A(n)) and the second test value (CRCFSV1B(n)), wherein the safety-related control unit (10) is designed for performing a validity check of the instantaneous value (FSV1A(n)) during a restart, the safety-related control unit (10) also being designed for checking the plausibility of the instantaneous value (FSV1A(n)) with the first test value (CRCFSV1A(n)) by means of the first processor (20) and checking the plausibility of the instantaneous value (FSV1A(n)) with the second test value (CRCFSV1B(n)) by means of the second processor (22).

2. The safety-related control unit of claim 1, **characterized in that** the second processor (22) is further designed for determining the second test value (CRCFSV1B(n)) in dependence on an instantaneous value (FSV1B(n)) of one of the second program variables (FSV1B), the second program variable (FSV1B) corresponding to the first program variable (FSV1A).

3. The safety-related control unit of claim 2, **characterized in that** the instantaneous value (FSV1A(n)) of the first program variable (FSV1A) and the instantaneous value (FSV1B(n)) of the second program variable (FSV1B) originate from the same task cycle (n).

4. The safety-related control unit of one of the preceding claims, **characterized in that** the safety-related control unit (10) is designed for determining the two test values (CRCFSV1A(n), CRCFSV1B(n)) in different manner.

5. The safety-related control unit of one of the preceding claims, **characterized in that** the safety-related control unit (10) is designed for determining the two test values (CRCFSV1A(n), CRCFSV1B(n)) repeatedly for successive instances of time.

6. The safety-related control unit of one of the preceding claims, **characterized in that** the first processor (20) is further designed for performing an instantaneous-value comparison.

7. The safety-related control unit of one of the preceding claims, **characterized in that** the data memory (92) comprises two storage areas (130, 132) allocated to the first program variable (116).

8. The safety-related control unit of claim 7, **characterized in that** the safety-related control unit (10) is designed for storing the instantaneous value (FSV1A(n)) and the two test values (CRCFSV1A(n), CRCFSV1B(n)) alternately into the two storage areas (130, 132).

9. The safety-related control unit of claim 8, **characterized in that** at least one of the two processors (20, 22) is designed for determining a value (SZA(n), SZB(n)) for a write counter (SZA, SZB), said write counter (SZA, SZB) representing which of the two storage areas (130, 132) contains the most recent instantaneous value.

10. The safety-related control unit of claim 9, **characterized in that** the first processor (20) is also designed for determining the first test value (CRCFSV1A(n)) in dependence on the instantaneous value (FSV1A(n)) and the value (SZA(n)) of the write counter (SZA).

11. The safety-related control unit of one of the preceding claims, **characterized in that** the first and the second program variables each are safety-related program variables.

12. A method for controlling an automated installation (12) by means of a safety-related control unit which comprises a first processor (20) and a second processor (22), the installation (12) comprising a plurality of sensors (16) and a plurality of actuators (14), the method comprising the steps of
- processing a plurality of first program variables using the first processor (20),
- determining a first test value (CRCFSV1A(n)) for at least one of the first program variables (FSV1A) in dependence on an instantaneous value (FSV1A(n)) present for this first program variable (FSV1A) at a first defined instance of time by means of the first processor (20),
- processing a plurality of second program variables using the second processor (22),
- determining a second test value (CRCFSV1B(n)) corresponding to the first test value (CRCFSV1A(n)) using the second processor (22),
- storing the instantaneous value (FSV1A(n), the first test value (CRCFSV1A(n)) and the second test value (CRCFSV1B(n)) in a non-volatile data memory (92), and
- performing a validity check of the instantaneous value (FSV1A(n)) during a restart, with the safety-related control unit (10) checking the plausibility of the instantaneous value (FSV1A(n)) with the first test value (CRCFSV1A(n)) by means of the first processor (20) and checking the plausibility of the instantaneous value (FSV1A(n)) with the second test value (CRCFSV1B(n)) by means of the second processor (22).

13. A computer program product comprising a data medium with program code which is designed for performing a method of claim 12 when the program code is running on a safety-related control unit (10) of one of claims 1 to 11.

## Revendications

1. Commande sécurisée destinée à commander une installation automatique (12) en application d'un programme d'utilisateur (34) qui est exécuté dans la commande sécurisée,
l'installation (12) comportant plusieurs capteurs (16) et plusieurs actionneurs (14),
le programme d'utilisateur (34) composant plusieurs ordres de commande (44, 46, 48) qui commandent les actionneurs (14),
la commande sécurisée présentant un premier processeur (20) configuré pour exécuter au moins une partie des ordres de commande (44) par traitement de plusieurs premières variables du programme,
un deuxième processeur (22) configuré pour exécuter au moins une partie des ordres de commande (48) par traitement de plusieurs deuxièmes variables du programme,
une mémoire non volatile (92) de données protégée contre les tensions nulles et qui doivent être présentes en cas de chute de tension lorsque la commande sécurisée est branchée,
le premier et le deuxième processeur (20, 22) étant tous deux configurés pour déterminer des valeurs de vérification qui permettent de vérifier la validité d'une valeur conservée dans la mémoire (92) de données,
**caractérisée en ce que**
le premier processeur (20) est configuré pour déterminer pour au moins une des premières variables (FSV1A) du programme une première valeur de vérification (CRCFSV1A(n)) en fonction d'une valeur instantanée (FSV1A(n)) qui prévaut à un premier instant défini pour cette variable (FSV1A) du programme,
**en ce que** le deuxième processeur (22) est en outre configuré pour déterminer une deuxième valeur de vérification (CRCFSV1B(n)) qui correspond à la première valeur de vérification (CRCFSV1A(n)),
**en ce que** la mémoire (92) de données est configurée pour conserver la valeur instantanée (FSV1A(n)), la première valeur de vérification (CRCFSV1A(n)) et la deuxième valeur de vérification (CRCFSV1B(n)),
**en ce que** la commande sécurisée (10) est configurée pour, lors de son redémarrage, exécuter une vérification de la validité de la valeur instantanée (FSV1A(n)) et
**en ce que** la commande sécurisée (10) est en outre configurée pour plausibiliser au moyen du premier processeur (20) la valeur instantanée (FSV1A(n)) par rapport à sa première valeur de vérification (CRCFSV1A(n)) et pour plausibiliser au moyen du deuxième processeur (22) la valeur instantanée (FSV1A(n)) par rapport à la deuxième valeur de vérification (CRCFSV1B(n)).

2. Commande sécurisée selon la revendication 1, **caractérisée en ce que** le deuxième processeur (22) est en outre configuré pour déterminer la deuxième valeur de vérification (CRCFSV1B(n)) en fonction d'une valeur instantanée (FSV1B(n)) de l'une des deuxièmes variables (FSV1B) du programme, la deuxième variable (FSV1B) du programme correspondant à la première variable (FSV1A) du programme.

3. Commande sécurisée selon la revendication 2, **caractérisée en ce que** la valeur instantanée (FSV1A(n)) des premières variables (FSV1A) du programme et la valeur instantanée (FSV1B(n)) des deuxièmes variables (FSV1B) du programme sont présentes dans le même cycle (n) d'exécution.

4. Commande sécurisée selon l'une des revendications précédentes, **caractérisée en ce que** la commande sécurisée (10) est configurée pour déterminer de manière différente les deux valeurs de vérification (CRCFSV1A(n), CRCFSV1B(n)).

5. Commande sécurisée selon l'une des revendications précédentes, **caractérisée en ce que** la commande sécurisée (10) est configurée pour déterminer de manière répétée à des instants successifs les deux valeurs de vérification (CRCFSV1A(n), CRCFSV1B(n)).

6. Commande sécurisée selon l'une des revendications précédentes, **caractérisée en ce que** le premier processeur (20) est en outre configuré pour exécuter une comparaison des valeurs instantanées.

7. Commande sécurisée selon l'une des revendications précédentes, **caractérisée en ce que** la mémoire (92) de données présente deux zones de mémoire (130, 132) associées aux premières variables (116) du programme.

8. Commande sécurisée selon la revendication 7, **caractérisée en ce que** la commande sécurisée (10) est configurée pour conserver la valeur instantanée (FSV1A(n)) et les deux valeurs de vérification (CRCFSV1A(n)), CRCFSV1B(n)) en alternance dans les deux zones de mémoire (130, 132).

9. Commande sécurisée selon la revendication 8, **caractérisée en ce qu'**au moins l'un des deux processeurs (20, 22) est configuré pour déterminer une valeur (SZA(n), SZB(n)) d'un compteur d'écriture (SZA, SZB), le compteur d'écriture (SZA, SZB) représentant celle de la zone de mémoire (130, 132) qui contient la valeur instantanée la plus récente.

10. Commande sécurisée selon la revendication 9, **caractérisée en ce que** le premier processeur (20) est en outre configuré pour déterminer la première valeur de vérification (CRCFSV1A(n)) en fonction de la valeur instantanée (FSV1A(n)) et de la valeur (SZA(n)) du compteur d'écriture (SZA).

11. Commande sécurisée selon l'une des revendications précédentes, **caractérisée en ce que** les premières et les deuxièmes valeurs du programme sont des variables du programme qui concernent la sécurité.

12. Procédé de commande d'une installation automatique (12) à l'aide d'une commande sécurisée qui présente un premier processeur (20) et un deuxième processeur (22), l'installation (12) comportant plusieurs capteurs (16) et plusieurs actionneurs (14), le procédé présentant les étapes qui consistent à :
traiter plusieurs des premières variables du programme à l'aide du premier processeur (20),
déterminer une première valeur de vérification (CRCFSV1A(n)) pour au moins l'une des premières variables (FSV1A) du programme en fonction d'une valeur instantanée (FSV1A(n)) qui prévaut pour cette première variable (FSV1A) du programme à un premier instant défini, à l'aide du premier processeur (20),
traiter plusieurs des deuxièmes variables du programme à l'aide du deuxième processeur (22),
déterminer une deuxième valeur de vérification (CRCFSV1B(n)) qui correspond à la première valeur de vérification (CRCFSV1A(n)), à l'aide du deuxième processeur (22),
conserver en mémoire la valeur instantanée (FSV1A(n)) de la première valeur de vérification (CRCFSV1A(n)) et la deuxième valeur de vérification (CRCFSV1B(n)) dans une mémoire non volatile (92) de données et
exécuter une vérification de la validité de la valeur instantanée (FSV1A(n)) lors du redémarrage de la commande sécurisée, la commande sécurisée (10) plausibilisant au moyen du premier processeur (20) la valeur instantanée (FSV1A(n)) par rapport à la première valeur de vérification (CRCFSV1A(n)) et plausibilisant au moyen du deuxième processeur (22) la valeur instantanée (FSV1A(n)) par rapport à la deuxième valeur de vérification (CRCFSV1B(n)).

13. Produit de programme informatique doté d'un support de données qui présente des codes de programme et configuré pour exécuter un procédé selon la revendication 12 lorsque le code de programme se déroule sur une commande sécurisée (10) selon l'une des revendications 1 à 11.
